# FASCICULE DE BREVET EUROPEEN

(11) **EP 0 600 764 B1**
(45) Date de publication et mention de la délivrance du brevet: **22.05.1996**
(21) Numéro de dépôt: 93402827.5
(22) Date de dépôt: 22.11.1993
(51) Int. Cl.: H02G 11/00, F16M 11/42, G08B 13/196

(54) **Dispositif de tension pour les câbles d'alimentation et coaxial d'une caméra déplacée dans un tunnel de surveillance vidéo**
Spannvorrichtung für Versorgungs- und Koaxialkabel einer in einem Videoüberwachungstunnel bewegbaren Kamera
Tensioning device for supply and coaxial cables of a camera movable in a video surveillance tunnel

(30) Priorité: 30.11.1992 FR 9214363
(43) Date de publication de la demande: 08.06.1994
(73) Titulaire: DESSINS ET TECHNIQUES DE L'INGENIERIE, F-91200 Athis-Mons (FR)
(72) Inventeur: Guarnotta, Albert, F-91800 Brunoy (FR)
(74) Mandataire: Lordonnois, Michel

(56) Documents cités:
- DE-A- 2 909 325
- FR-A- 909 480
- FR-A- 2 565 954
- FR-A- 2 678 796
- US-A- 3 588 388

## Description

La présente invention se rapporte à un dispositif de tension pour le câble d'alimentation et le câble coaxial d'une caméra déplacée dans un tunnel de surveillance vidéo. Plus particulièrement, elle concerne un tel dispositif de tension adapté pour foumir une tension réglable et équilibrée au câble d'alimentation et de multiplexage et au câble coaxial de transmission vidéo, raccordés à une caméra supportée par un chariot de translation en va-et-vient dans un tunnel de surveillance vidéo, chacun de ces deux câbles étant ancré de manière fixe sur le chariot, ainsi qu'à son point de pénétration dans le tunnel, en provenant de l'extérieur de celui-ci. Un tel dispositif est décrit dans le document DE-A-29 09 325.

Dans la technique actuelle des tunnels de surveillance vidéo, comme décrit par exemple dans la demande de brevet FR-91.08.151, publiée le 08 janvier 1993 sous le n° 2.678.796 (qui n'est donc pas à considérer comme état de la technique suivant Art. 54(2) ou (3) CBE), au nom de la demanderesse, le chariot de support d'une tourelle de rotation en azimut et en site, sur laquelle est montée une caméra vidéo, est translaté sur un chemin profilé de guidage intérieur au tunnel, au moyen d'un dispositif de translation en va-et-vient constitué par une câblette sous tension passant dans la gorge d'une poulie motrice située à une extrémité du tunnel et sur une poulie de renvoi à l'autre extrémité de celui-ci afin de former une boucle fermée dont les deux extrémités sont amarrées sur le chariot. Ce chariot entraîne un câble d'alimentation et de multiplexage, ainsi qu'un câble coaxial, qui pénètrent et sont fixés respectivement, pour l'un, à une extrémité du tunnel et, pour l'autre, à l'extrémité opposée de celui-ci, chacun de ces câbles étant capelé à l'intérieur du tunnel sur une poulie tendeur avant d'être ancré sur le chariot, laquelle poulie est fixée à une extrémité d'un câble élastique qui est ancré, à son autre extrémité, sur l'extrémité correspondante du tunnel.

Ce câblage foumit un agencement de tension ou de rappel du câble capelé sur la poulie tendeur et évite à ce demier de présenter une flèche trop forte et, par suite, de rester suspendu à l'intérieur du tunnel à un niveau supérieur au chariot sans risque de frottement sur celui-ci ou sur la paroi intérieure du tunnel. Cette conception de dispositif de tension agissant sur le câble d'alimentation et sur le câble coaxial donne, dans l'ensemble, toute satisfaction de fonctionnement mais il s'avère que le câble élastique perd assez vite de son élasticité dans la mesure où il n'assure plus une tension suffisante et doit être, de ce fait, remplacé fréquemment.

Afin d'éviter cet inconvénient provoqué par l'utilisation d'un câble élastique, la demanderesse a conçu un nouveau câblage de tension qui fait l'objet de la présente invention et qui utilise, non plus deux câbles élastiques, mais une seule câblette souple n'ayant qu'un faible allongement sous sa tension de fonctionnement et qui agit pour fournir une tension équilibrée, simultanément sur le câble d'alimentation et de multiplexage et sur le câble coaxial, ancrés tous deux sur le chariot et fixés à leur point respectif de pénétration dans le tunnel.

Ainsi, selon l'invention, ce dispositif de tension pour le câble d'alimentation et de multiplexage et le câble coaxial, ancrés tous deux sur un chariot de support et de translation de caméra dans un tunnel de surveillance vidéo et fixés à leur point de pénétration dans ce tunnel, ce dispositif étant remarquable du fait que chacun de ces câbles est capelé sur une poulie d'un moufle mobile de tension avant d'être ancré sur le chariot, l'un à une extrémité de celui-ci et l'autre, à l'extrémité opposée et que le point de pénétration et de fixation dans le tunnel du câble d'alimentation et de multiplexage est situé dans la partie longitudinale médiane de ce tunnel et sur un côté latéral de celui-ci correspondant au côté du chariot où est ancré ce câble, alors que le point de pénétration et de fixation du câble coaxial, ainsi que son point d'ancrage sur le chariot sont situés de la même manière, mais de l'autre côté latéral de ce tunnel, le moufle de tension de ce câble coaxial étant situé pour se déplacer dans une moitié de la longueur du tunnel, alors que le moufle de tension du câble d'alimentation et de multiplexage est situé pour se déplacer dans l'autre moitié de la longueur du tunnel, ces deux moufles de tension étant reliés entre eux par une câblette souple qui est tendue continuellement au moyen d'un galet de dispositif tendeur.

Par ailleurs, et conformément à la présente invention, la câblette souple, qui doit fournir une tension équilibrée entre la partie de câble d'alimentation et de multiplexage et la partie de câble coaxial qui se déplacent en fonction de la position du chariot de support de caméra à l'intérieur du tunnel, et qui est fixée par une de ses extrémités à l'un des deux moufles, est câblée depuis ce moufle pour passer d'abord sur une première poulie de renvoi, fixée sur l'extrémité du tunnel correspondante à la moitié de celui-ci dans laquelle ce moufle doit se déplacer par suite du mouvement de translation du chariot sur toute la longueur du tunnel, puis cette câblette suit toute la longueur du tunnel avant de passer sur une seconde poulie de renvoi fixée sur l'autre extrémité du tunnel et, ensuite, passe sur le galet du dispositif tendeur, puis sur une troisième poulie de renvoi, fixée sur cette même extrémité du tunnel et, enfin, est fixée, par son autre extrémité, à l'autre moufle qui est situé pour se déplacer dans l'autre moitié correspondante de ce tunnel.

En outre, et conformément à l'invention, le câble d'alimentation et de multiplexage pénètre dans la partie médiane d'un des côtés latéraux du tunnel en un point situé à une distance d'environ un mètre de l'axe transversal médian de ce dernier, cette distance étant prise depuis cet axe en direction opposée à la position du moufle de tension de ce câble d'alimentation et de multiplexage, le point de pénétration du câble coaxial étant situé de la même manière mais du côté latéral opposé du tunnel, c'est-à-dire à environ un mètre de l'axe transversal médian de celui-ci, mais en direction opposée à la position du moufle de tension de ce câble coaxial.

Par ailleurs, dans un mode de réalisation conforme à l'invention, afin d'éviter une surtension de la câblette reliant les moufles entre eux, ainsi que des câbles d'alimentation et coaxial capelés respectivement dans ces moufles, cette surtension pouvant être dûe aux poids propres de ces derniers et des câbles, des gouttières sont installées latéralement dans l'intérieur du tunnel, et sur toute la longueur de celui-ci, de manière à ce qu'elles servent respectivement de glissières d'appui pour les moufles et éventuellement pour les câbles, ces gouttières étant prévues de préférence constituée en matière plastique ayant un faible coefficient de frottement, tel que du PVC.

D'autre part, dans un autre mode de réalisation conforme à l'invention, ce dispositif de tension peut également être adapté pour fournir en même temps de dispositif de commande de translation du chariot et, pour ce faire, l'une des trois poulies de renvoi de la câblette souple et, de préférence, la seconde poulie située à proximité du galet du dispositif tendeur, au lieu d'être une poulie entraînée, est commandée en rotation pour servir de poulie motrice d'entraînement en va-et-vient de la câblette, chacun des deux moufles de tension servant alors respectivement, pour l'un, de moufle entraîneur ou de traction et, pour l'autre, de moufle entraîné et inversement, en coopérant avec chacun des câbles pour translater le chariot dans un sens ou dans l'autre. Dans ce cas, la câblette pourrait être une courroie crantée ou un câble métallique.

On notera, en outre, que la câblette souple est prévue, de préférence, constituée en nylon ayant un faible coefficient d'allongement sous tension.

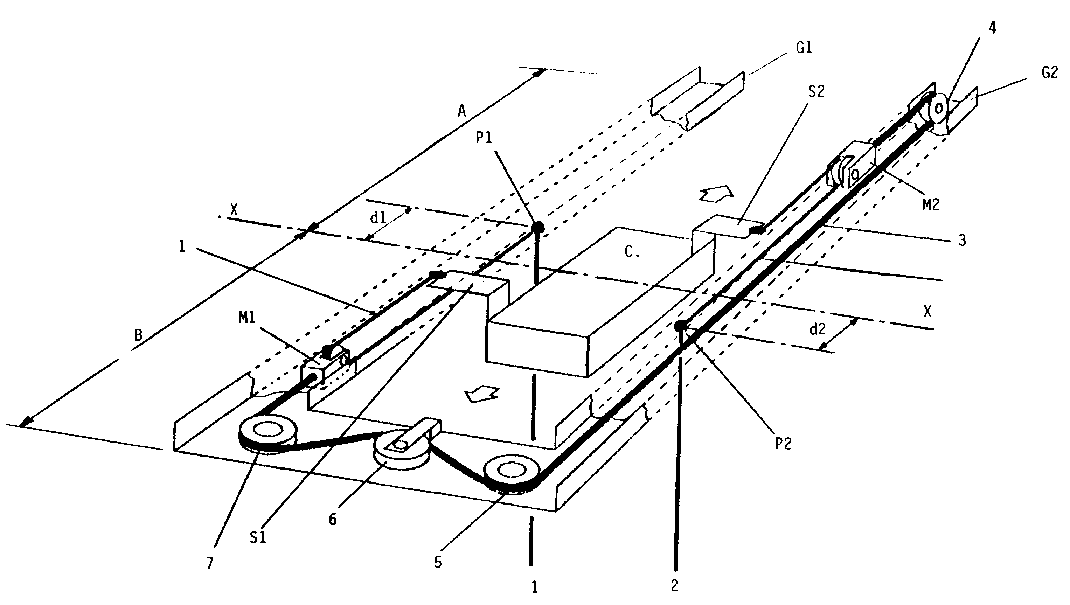

D'autres caractéristiques de la présente invention apparaîtront de la description suivante d'un mode de réalisation de dispositif de tension des câbles d'alimentation et coaxial d'une caméra à l'intérieur d'un tunnel de surveillance vidéo, donné à titre d'exemple non limitatif et représenté schématiquement dans le dessin ci-joint.

Comme on le remarque dans ce dessin, le tunnel de surveillance proprement dit n'est pas représenté, le chariot C support de caméra est représenté schématiquement sous forme d'un bloc adapté pour se déplacer sur un chemin de glissement (non représenté) suivant un mouvement de translation en va-et-vient pratiquement sur toute la longueur utile du tunnel, et des gouttières latérales G1, G2, intérieures à ce dernier, sont figurées dans leur majeure partie en pointillés pour faciliter la compréhension, ces gouttières étant adaptées pour servir de glissières respectivement à deux moufles de tension M1, M2, de la partie intérieure au tunnel des câbles d'alimentation 1 et coaxial 2 reliés à la caméra (non représentée).

Conformément à l'invention, comme on le voit sur le dessin, le câble 1 d'alimentaion et de multiplexage, provenant de l'extérieur du tunnel, pénètre dans l'un des côtés latéraux de celui-ci en un point P1 situé à une distance d1 d'environ un mètre prise à partir de l'axe transversal médian XX du tunnel et du côté de la moitié A de la longueur de la gouttière G1; par contre, le câble coaxial 2 pénètre de l'autre côté latéral opposé du tunnel en un point P2 situé à une distance d2, d'environ un mètre, prise à partir de l'axe transversal médian XX du tunnel et du côté de la moitié B de la longueur de la gouttière G2.

A partir de son point de pénétration P1, le câble d'alimentation et de multiplexage 1 est amené dans la gorge de la poulie du moufle M1, depuis laquelle il est dirigé vers la console S1 dont est pourvu le chariot C et, depuis cette console, il est relié au boîtier d'appareillage de la caméra, note étant prise que la longueur de ce câble 1 entre son point de pénétartion P1, où il est immobilisé, et son point d'arrivée sur la console S1, où il est ancré, est prévue de manière que le chariot puisse être déplacé sur toute la longueur du tunnel, le moufle M1, au cours d'une course totale de ce chariot, devant seulement se déplacer dans la moitié B de la gouttière G1 sans franchir l'axe transversal médian XX, lorsque le chariot atteint l'extrémité de la moitié A.

En ce qui le concerne, le câble coaxial 2 est câblé de façon similaire mais à l'inverse du câblage du câble d'alimentation et de multiplexage 1. En effet, comme on le voit dans le dessin, depuis son point de pénétration P2 dans le tunnel il est capelé sur la poulie du moufle M2 avant de parvenir à la console S2, dont est pourvu le chariot du côté opposé à la console S1, puis d'être relié au boîtier d'appareillage de la caméra. Bien entendu, comme le câble d'alimentation 1, le câble coaxial 2 est immobilisé à son point de pénétration P2 et ancré sur la console S2 après être passé dans le moufle M2, sa longueur entre le point P2 et la console S2 étant identique à celle du câble d'alimentation 1, le moufle M2, au cours d'une course totale du chariot C, devant seulement se déplacer dans la moitié A de la gouttière G2, sans franchir l'axe transversal médian XX lorsque le chariot atteint l'extrémité de la moitié B.

Pour assurer une certaine tension aux câbles 1 et 2, dans leurs parties mouflées, de façon à ce qu'ils ne frottent pas inconsidérément dans les gouttières G1 et G2 respectivement, la présente invention prévoit un dispositif de tension de ces câbles constitué par une câblette souple 3, ou une courroie d'entraînement, qui relie l'un à l'autre les moufles M1 et M2, cette câblette, depuis ce dernier moufle M2, étant passée dans la gorge d'une première poulie de renvoi 4 montée de manière fixe dans l'extrémité de la moitié A de la gouttière G2, puis renvoyée vers l'extrémité de la moitié B de cette gouttière G2 où elle est passée dans la gorge d'une seconde poulie de renvoi 5 puis, de là, cette câblette est passée dans la gorge d'un galet tendeur - faisant partie d'un dispositif tendeur (non représenté mais situé à cette même extrémité de la moitié B), puis, depuis ce galet 6, elle est passée dans la gorge d'une troisième poulie de renvoi 7 montée de manière fixe dans l'extrémité de la moitié B de la gouttière G1 à partir de laquelle elle est dirigée vers le moufle M1 sur lequel elle est fixée.

Le fonctionnement de ce dispositif de tension équilibrée entre les deux câbles 1 et 2 est facilement déductible du dessin. En effet, lorsque le chariot est déplacé en direction de l'extrémité du tunnel correspondant à la moitié A, le moufle M1 se trouve entraîné dans la moitié B en direction de l'axe XX par le câble d'alimentation 1 ancré sur la console S1; dans son déplacement le moufle M1 entraîne, par l'intermédiaire de la câblette de tension 3, le moufle M2 qui se déplace alors dans le même sens que le chariot C et qui entraîne le câble coaxial 2 ancré sur la console S2. De manière inverse, lorsque le chariot est déplacé en direction de l'extrémité du tunnel correspondant à la moitié B, le moufle M2 se trouve entraîné par le câble coaxial 2 en direction de l'axe XX dans le même sens que le chariot C et, par l'intermédiaire de la câblette 3, le moufle M1 est également déplacé dans ce même sens et entraîne le câble d'alimentation et de multiplexage 1, si bien que ces deux câbles sont toujours tendus sous la tension de la câblette 3 fournie par le galet 6 du dispositif tendeur.

Cet agencement de câblage de tension des câbles 1 et 2 au moyen de la câblette 3, conformément à l'invention, peut fournir un mode de réalisation particulier adapté, non seulement pour équilibrer la tension de ces câbles 1 et 2 à l'intérieur du tunnel, mais pour constituer en même temps un câblage d'entraînement en translation du chariot C dans les deux sens ne nécessitant aucun autre câblage de commande de translation, comme c'était le cas, par exemple, dans le dispositif faisant l'objet de la demande de brevet FR-A-2.678.796 de la demanderesse. En effet, pour commander l'entraînement du chariot C dans les deux sens au moyen du câblage mouflé qui vient d'être décrit, il suffit de rendre motrice l'une des poulies de renvoi 4, 5, 7, de préférence la poulie 5 située à l'extrémité de la moitié B de la gouttière G2 et au voisinage du galet 6 du dispositif tendeur. On comprend aisément que, dans ce cas, le chariot C est entraîné par l'un ou l'autre des câbles 1 et 2, suivant le sens de déplacement désiré, suite à la traction exercée par la câblette 3 sur l'un ou l'autre des moufles M1 et M2 qui deviennent alors, pour l'un, moufle entraîneur et, pour l'autre, moufle entraîné, ou inversement.

## Revendications

1. Dispositif de tension adapté pour fournir une tension réglable et équilibrée au câble d'alimentation et de multiplexage, ainsi qu'au câble coaxial de transmission vidéo, raccordés tous deux à une tourelle de caméra supportée par un chariot de translation en va-et-vient dans un tunnel de surveillance vidéo, chacun de des deux câbles étant ancré de manière fixe sur le chariot, ainsi qu'à son point de pénétration dans le tunnel en provenant de l'extérieur à celui-ci, ce dispositif étant caractérisé par le fait que chacun des câbles d'alimentation et de multiplexage (1) et coaxial (2) est capelé sur une poulie d'un moufle mobile respectif (M1, M2) de tension avant d'être ancré sur une console respective (S1, S2) du chariot (C), et que le point de pénétration (P1) et de fixation dans le tunnel du câble (1) d'alimentation et de multiplexage est situé dans la partie longitudinale médiane de ce tunnel et sur un côté latéral de celui-ci correspondant au côté du chariot (C) où est ancré ce câble, alors que le point de pénétration (P2) et de fixation du câble coaxial (2), ainsi que son point d'ancrage sur le chariot (C) sont situés de la même manière, mais de l'autre côté latéral de ce tunnel, le moufle de tension (M2) de ce câble coaxial (2) étant situé pour se déplacer dans une moitié (A) de la longueur du tunnel, alors que le moufle de tension (M1) du câble d'alimentation et de multiplexage (1) est situé pour se déplacer dans l'autre moitié (B) de la longueur du tunnel, ces deux moufles de tension étant reliés entre eux par une câblette souple (3) qui est tendue continuellement au moyen d'un galet (6) de dispositif tendeur.

2. Dispositif selon la revendication 1, caractérisé par le fait que la câblette souple (3) reliant le moufle de tension (M1) du câble d'alimentation et de multiplexage (1) au moufle de tension (M2) du câble coaxial (2) est câblée depuis ce moufle (M2) pour passer d'abord sur une première poulie de renvoi (4), fixée sur l'extrémité du tunnel correspondante à la moitié (A) de celui-ci dans laquelle ce moufle doit se déplacer par suite du mouvement de translation du chariot sur toute la longueur du tunnel, puis cette câblette (3) suit toute la longueur du tunnel avant de passer sur une seconde poulie de renvoi (5) fixée sur l'autre extrémité du tunnel et, ensuite, passe sur le galet (6) du dispositif tendeur, puis sur une troisième poulie de renvoi (7), fixée sur cette même extrémité du tunnel et, enfin, est fixée, par son autre extrémité, à l'autre moufle (M1) qui est situé pour se déplacer dans l'autre moitié (B) correspondante de ce tunnel.

3. Dispositif selon l'une ou l'autre des revendications 1 ou 2, caractérisé par le fait que le câble d'alimentation et de multiplexage (1) pénètre dans la partie médiane d'un des côtés latéraux du tunnel en un point (P1) situé à une distance (d1) d'environ un mètre de l'axe transversal médian (XX) de ce dernier, cette distance (d1) étant prise depuis cet axe en direction opposée à la position du moufle de tension (M1) de ce câble d'alimentation et de multiplexage, le point (P2) de pénétration du câble coaxial (2) étant situé de la même manière mais du côté latéral opposé du tunnel, c'est-à-dire à environ un mètre de l'axe transversal médian (XX) de celui-ci, mais en direction opposée à la position du moufle de tension (M2) de ce câble coaxial (2).

4. Dispositif selon l'une quelconque des revendications 1 à 3, caractérisé par le fait que des gouttières (G1 et G2) sont installées latéralement dans l'intérieur du tunnel, et sur toute la longueur de celui-ci, de manière à ce qu'elles servent respectivement de glissières d'appui pour les moufles (M1, M2) et éventuellement pour les câbles, ces gouttières étant prévues de préférence constituée en matière plastique ayant un faible coefficient de frottement, tel que du PVC.

5. Dispositif selon l'une quelconque des revendications 1 à 4, adapté pour fournir, non seulement, une tension équilibrée aux câbles d'alimentation (1) et coaxial (2) lors de la translation du chariot (C) dans un sens ou dans l'autre, mais également pour constituer un dispositif de commande de cette translation du chariot, sans nécessiter d'autres câblages pour entraîner ce dernier, caractérisé par le fait que l'une des trois poulies de renvoi (4, 5, 7) de la câblette souple (3), ou courroie crantée, et, de préférence, la seconde poulie (5) située à proximité du galet (6) du dispositif tendeur, au lieu d'être une poulie entraînée, est commandée en rotation pour servir de poulie motrice d'entraînement en va-et-vient de la câblette, ou courroie crantée, chacun des deux moufles de tension (M1, M2) servant alors respectivement, pour l'un, de moufle entraîneur ou de traction et, pour l'autre, de moufle entraîné et inversement, en coopérant avec chacun des câbles (1, 2) pour translater le chariot (6) dans un sens ou dans l'autre.

6. Dispositif selon l'une quelconque des revendications 1 à 5, caractérisé par le fait que la câblette souple (3) est prévue, de préférence, constituée en nylon ayant un faible coefficient d'allongement sous tension.

## Patentansprüche

1. Spannvorrichtung zur Ausübung einer regelbaren und ausgeglichenen Spannung auf das Versorgungs- und Multiplexbetriebkabel sowie auf das Koaxialkabel zur Videoübertragung, die beide mit einem Kameraaufbau verbunden sind, der durch einen hin- und hergehenden Laufwagen in einem Videoüberwachungstunnel getragen ist, wobei jedes der beiden Kabel auf dem Wagen sowie am Punkt seines Eindringens in den Tunnel, von außen bis in diesen eintretend, fest verankert ist, dadurch gekennzeichnet, daß jedes Versorgungs- und Multiplexbetriebkabel (1) und Koaxialkabel (2) auf einer Seilrolle eines entsprechenden bewegbaren Spannseilzugs (M1, M2) umgelenkt wird, bevor es auf einer entsprechenden Konsole (S1, S2) des Wagens (C) verankert wird, und daß der Eindring- und Befestigungspunkt (P1) des Versorgungs- und Multiplexbetriebkabels (1) im Tunnel im mittleren Längsteil des Tunnels und auf dessen der Seite des Wagens (C) entsprechenden Seite liegt, wo dieses Kabel verankert ist, während der Eindring- und Befestigungspunkt (P2) des Koaxialkabels (2) sowie sein Verankerungspunkt auf dem Wagen (C) in der gleichen Weise plaziert sind, aber auf der anderen Längsseite des Tunnels, wobei der Spannseilzug (M2) des Koaxialkabels (2) so angeordnet ist, daß er sich in einer Hälfte (A) der Tunnellänge verschiebt, während der Spannseilzug (M1) des Versorgungs- und Multiplexbetriebkabels (1) so angeordnet ist, daß er sich in der anderen Hälte (B) der Tunnellänge verschiebt, wobei die beiden Spannseilzüge durch einen biegsamen Riemen (3) miteinander verbunden sind, der kontinuierlich mittels einer Spannrolle (6) gespannt wird.

2. Vorrichtung nach Anspruch 1, dadurch gekennzeichnet, daß der biegsame Riemen (3), der den Spannseilzug (M1) des Versorgungs- und Multiplexbetriebkabels (1) mit dem Spannseilzug (M2) des Koaxialkabels (2) verbindet, ab dem Seilzug (M2) so geführt wird, daß er zuerst über eine erste Umlenkscheibe (4) läuft, die an dem Tunnelende befestigt ist, die dessen Hälfte (A) entspricht, in der dieser Seilzug sich infolge der Verschiebebewegung des Wagens über die ganze Länge des Tunnels bewegen muß, dann folgt dieser Riemen der ganzen Länge des Tunnels, bevor er über eine zweite, am anderen Ende des Tunnels befestigte Umlenkscheibe (5) und anschließend über die Rolle der Spannvorrichtung und sodann über eine dritte, am selben Ende des Tunnels befestigte Umlenkscheibe (7) läuft und schließlich mit seinem anderen Ende an dem anderen Seilzug (M1) befestigt wird, der so angeordnet ist, daß er sich in der entsprechenden anderen Hälfte (B) des Tunnels verschiebt.

3. Vorrichtung nach Anspruch 1 oder 2, dadurch gekennzeichnet, daß das Versorgungs- und Multiplexbetriebkabel (1) in den mittleren Teil einer der Seiten des Tunnels in einem Punkt (P1) eintritt, der sich in einem Abstand (d1) von ungefähr einem Meter von der Quermittelachse (XX) des letzteren befindet, wobei der Abstand (d1) von dieser Achse in zur Position des Spannseilzugs (M1) des Versorgungs- und Multiplexbetriebkabels entgegengesetzter Richtung gemessen ist, wobei der Eindringpunkt (P2) des Koaxialkabels (2) in der gleichen Weise, aber auf der entgegengesetzten Seite des Tunnels, angeordnet ist, d.h. ungefähr einen Meter von dessen Quermittelachse (XX), aber in entgegengesetzer Richtung zur Position des Spannseilzugs (M2) des Koaxialkabels (2).

4. Vorrichtung nach einem der Ansprüche 1 bis 3, dadurch gekennzeichnet, daß Rinnen (G1 und G2) seitlich im Innern des Tunnels und über dessen ganze Länge angeordnet sind, so daß sie als Gleitführungen für die Seilzüge (M1, M2) bzw. möglicherweise für die Kabel dienen, wobei die Rinnen vorzugsweise aus Kunststoffmaterial mit einem geringen Reibungskoeffizienten, wie z.B. PVC, bestehend vorgesehen sind.

5. Vorrichtung nach einem der Ansprüche 1 bis 4, die so ausgebildet ist, daß sie auf das Versorgungskabel (1) und Koaxialkabel (2) während der Verschiebung des Wagens (4) in die eine oder andere Richtung nicht nur eine ausgeglichene Spannung ausübt, sondern auch eine Vorrichtung zur Steuerung der Verschiebung des Wagens bildet, ohne daß eine weitere Seilführung zur Mitnahme des letzteren erforderlich ist, dadurch gekennzeichnet, daß eine der drei Umlenkscheiben (4, 5, 7) des biegsamen Riemens (3) oder Zahnriemens, und vorzugsweise die zweite, in der Nähe der Rolle (6) der Spannvorrichtung angeordnete Scheibe (5), keine mitgenommene Scheibe ist, sondern drehwinkelgesteuert ist, um als Antriebsscheibe für das hin- und hergehende Mitnehmen des Riemens oder Zahnriemens zu dienen, wobei jeder der beiden Spannseilzüge (M1, M2) dann jeweils entweder als Mitnahme- oder Zugseilzug oder als mitgenommener Seilzug und umgekehrt dient, indem er mit jedem Kabel (1, 2) zusammenarbeitet, um den Wagen (6) in die eine oder andere Richtung zu verschieben.

6. Vorrichtung nach einem der Ansprüche 1 bis 5, dadurch gekennzeichnet, daß der biegsame Riemen (3) vorzugsweise aus Nylon bestehend vorgesehen ist, das unter Spannung einen niedrigen Dehnungskoeffizienten hat.

## Claims

1. A tensioning device adapted to supply an adjustable, balanced tension to the power supply and multiplexing cable, as well as to the coaxial video transmission cable, which are both connected to a camera turret carried by a carriage moving backwards and forwards in a video surveillance tunnel, each of the two cables being attached fixedly to the carriage as well as to its point of entry into the tunnel coming from outside it, this device being characterized in that each of the cables (the supply and multiplexing cable (1) and the coaxial cable (2)) is firmly attached to a pulley of a respective tensioning mobile pulley block (M1, M2) before being anchored to a respective bracket (S1, S2) on the carriage (C), and in that the point of entry (P1) and fastening in the tunnel of the supply and multiplexing cable (1) is situated in the median longitudinal portion of this tunnel and on a side thereof corresponding to the side of the carriage (C) to which this cable is anchored, while the point of entry (P2) and fastening of the coaxial cable (2), as well as its anchoring point on the carriage (C), are situated in the same manner, but on the other side of this tunnel, the tensioning pulley block (M2) of this coaxial cable (2) being situated for movement in one half (A) of the length of the tunnel while the tensioning pulley block (M1) of the supply and multiplexing cable (1) is situated for movement in the other half (B) of the length of the tunnel, these two tensioning pulley blocks being connected together by a small flexible cable (3) which is tensioned continuously by means of a tensioning device roller (6).

2. A device according to claim 1, characterized in that the small flexible cable (3) connecting the tensioning pulley block (M1) of the supply and multiplexing cable (1) to the tensioning pulley block (M2) of the coaxial cable (2) is laid, starting at this pulley block (M2), to pass firstly over a first return pulley (4), fixed to the end of the tunnel corresponding to the half (A) thereof in which this pulley block moves owing to the translational movement of the carriage over the whole length of the tunnel, then this small cable (3) follows the entire length of the tunnel before passing over a second return pulley (5) fixed to the other end of the tunnel and, then, passes over the tension device roller (6), then over a third return pulley (7), fixed to this same end of the tunnel and, finally, is fixed by its other end to the other pulley block (M1) which is situated for movement in the other, corresponding, half (B) of this tunnel.

3. A device according to either one of claims 1 or 2, characterized in that the supply and multiplexing cable (1) enters the median portion of one of the sides of the tunnel at a point (P1) situated at a distance (d1) approximately one metre from the transverse median axis (XX) thereof, this distance (d1) being taken from this axis in the opposite direction from the position of the tensioning pulley block (M1) of this supply and multiplexing cable, the entry point (P2) of the coaxial cable (2) being situated in the same way but on the opposite side of the tunnel, that is to say approximately one metre from the transverse median axis (XX) thereof, but in the opposite direction from the position of the tensioning pulley block (M2) of this coaxial cable (2).

4. A device according to any one of claims 1 to 3, characterized in that ducts (G1 and G2) are installed laterally inside the tunnel, and over the whole length thereof, so that they act respectively as support slides for the pulley blocks (M1, M2) and optionally for the cables, these ducts preferably being made of plastics material with a low friction coefficient, such as PVC.

5. A device according to any one of claims 1 to 4, adapted not only to provide a balanced tension to supply (1) and coaxial (2) cables when the carriage (C) moves translationally in one or other direction but also to constitute a control device for this translational carriage movement without requiring other cabling to drive the latter, characterized in that one of the three return pulleys (4, 5, 7) of the small flexible cable (3), or synchronous belt, and preferably the second pulley (5) situated close to the roller (6) of the tensioning device, instead of being a driven pulley, is controlled rotationally to act as a drive pulley for driving the small cable or synchronous belt to and fro, the two tensioning pulley blocks (M1, M2) then acting, respectively, one as a drive or traction pulley block and the other as a driven pulley block, and vice versa, cooperating with each of the cables (1, 2) to displace the carriage (6) in one or other direction.

6. A device according to any one of claims 1 to 5, characterized in that the small flexible cable (3) is preferably made of nylon with a low coefficient of stretching strain.
